# EUROPEAN PATENT APPLICATION

(11) **EP 4 838 388 A1**
(43) Date of publication of application: **11.11.2026**
(21) Application number: 26176742.0
(22) Date of filing: 05.05.2026
(51) Int. Cl.: G06F 21/31, G06F 21/55

(54) **GENERATION OF USER OCCUPATION LABELS BASED ON SENSOR EVENTS**

(30) Priority: 07.05.2025 US 202519201740
(71) Applicant: CrowdStrike Inc., Sunnyvale, CA 94086 (US)
(72) Inventor: RUTERMANN-FRANZ, Tim, Sunnyvale, 94086 (US); BOLDT, Cullen, Sunnyvale, 94086 (US); ATKINSON, John, Sunnyvale, 94086 (US); ZUCKERMAN, Ori, Sunnyvale, 94086 (US)
(74) Representative: Murgitroyd & Company

(57) **Abstract**

The present disclosure provides techniques for generating user occupation labels that can be used for anomaly detection based on data that is indicative of a user's actual application usage. A plurality of application events may be grouped to identify application behavior profiles. The plurality of application behavior profiles may be clustered to generate a set of application behavior profile clusters, wherein each of the set of application behavior profile clusters is associated with a set of users. For each of the set of application behavior profile clusters, job description information corresponding to the set of users associated with the application behavior profile cluster may be obtained and an occupation label associated with each of the set of users associated with the application behavior profile cluster may be generated based on the application behavior profiles of the application behavior profile cluster and the job description information.

## Description

### TECHNICAL FIELD

Aspects of the present disclosure relate to cybersecurity, and more particularly, to generation of user occupation labels for use in detecting unauthorized data egress.

### BACKGROUND

Cybersecurity refers to the practice of protecting computer systems, networks, and digital assets from theft, damage, unauthorized access, and various forms of cybersecurity threats. Cybersecurity threats encompass a wide range of activities and actions that pose risks to the confidentiality, integrity, and availability of computer systems and data. These threats can include malicious activities such as unauthorized data egress, viruses, ransomware, and hacking attempts aimed at exploiting vulnerabilities in software or hardware.

### BACKGROUND

Accordingly there is provided a method, a system, and a computer program as detailed in the claims that follow.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
FIG. 1 is a block diagram that illustrates an example system for generating occupation labels for unauthorized data egress detection, in accordance with some aspects of the present disclosure.
FIG. 2 is a diagram that illustrates a grouping of application events, in accordance with some aspects of the present disclosure.
FIG. 3 is a block diagram that illustrates an example system for generating occupation labels for unauthorized data egress detection, in accordance with some aspects of the present disclosure.
FIG. 4 is a block diagram that illustrates an example system where occupation labels are being used for unauthorized data egress detection, in accordance with some aspects of the present disclosure.
FIG. 5 is a flow diagram illustrating an example method for generating occupation labels for unauthorized data egress detection, in accordance with some aspects of the present disclosure.
FIG. 6 illustrates a diagrammatic representation of a machine in an example form of a computer system that may perform one or more of the operations described herein in accordance with some aspects of the present disclosure.

### DETAILED DESCRIPTION

Data egress may refer to a process of data leaving a device, an application, a system, and/or a network and the data being transferred to another location (e.g., another device, another application, another system, and/or another network). Data egress may pose a security risk to an organization if the data egress is unauthorized by the organization. For instance, a malicious actor may gain access to a device of an organization, access sensitive data of the organization, and transfer the sensitive data to a device (e.g., a universal serial bus (USB) drive) of the malicious actor. Data egress cybersecurity may refer to a process of monitoring and controlling a flow of data (e.g., sensitive data) out of a device, an application, a system, and/or a network to prevent unauthorized access to the data.

Various indicators exist that may indicate unauthorized data egress. Examples of such indicators include network traffic indicating unexpected data egress (particularly to unusual locations), unencrypted data transmission, use of unauthorized software, sudden increases in data access from atypical locations, and whether or not data egress (or attempted data egress) occurs during regular working hours (e.g., normal working hours) of a user (e.g., an employee). For example, data egress that occurs outside of regular working hours of the user may be indicative of unauthorized data egress, whereas data egress that occurs during the regular working hours of the user may be indicative of authorized data egress.

The use of job title/job description information can enhance the detection of unauthorized data egress. For instance, a salesperson and a software engineer will most likely have different data egress behavior. It would be beneficial for an organization to know if one of these job groups is exhibiting anomalous behavior that does not match the usual behavior of that group (i.e., is indicative of unauthorized data egress).

Organizations often employ authentication services that connect users in an organization with network resources they require for their work. Active Directory is one example of such an authentication service, and it includes a database and set of services for authenticating users attempting to access network resources. The database (or directory) contains information about the organization's IT environment, including what users and devices there are, what permissions each user and device has, and other relevant user information. For example, the database might list 100 user accounts and details for each user account including the user's job title/job description, phone number, password, and permissions. The set of services may perform authentication and authorization functions, for example by checking the user ID and password entered by a user to ensure that each user is who they claim to be. The set of services may also restrict users to accessing only the data they're allowed to use.

Although job title and job description information (hereinafter referred to collectively as job description information) can be sourced from an authentication service (such as Active Directory), there are numerous challenges with respect to use of such data for detection of unauthorized data egress. For example, job description information can be too broad, too specific, outdated, entirely or partially missing, or not well-maintained. Additionally, the job titles maintained by such services are often simply arbitrary descriptions that do not reflect a user's true everyday behavior.

The present disclosure addresses the above-noted and other deficiencies by generating user occupation labels based on sensor event data that is indicative of a user's actual application usage, in combination with job description information and, when available, data from third party collaboration application program interfaces (APIs). More specifically, a processing device may group a plurality of application events to identify a plurality of application behavior profiles. Each application behavior profile may indicate a utilization frequency of one or more applications by a corresponding user. The plurality of application behavior profiles may be clustered to generate a set of application behavior profile clusters, wherein each of the set of application behavior profile clusters is associated with a set of users. For each of the set of application behavior profile clusters, job description information (e.g., maintained by an authentication service) corresponding to the set of users associated with the application behavior profile cluster may be obtained and an occupation label associated with each of the set of users associated with the application behavior profile cluster may be generated. The occupation label may be generated based on the application behavior profiles of the application behavior profile cluster and the job description information.

A user's actual application usage may differ greatly from the applications they are allowed to access or have installed which are often broadly set at the organizational level. This renders job description information sourced from an authentication service as ineffective for detection of unauthorized data egress. By generating occupation labels based at least in part on a user's actual application usage, the occupation labels may provide a more accurate picture of the user's job functions than job description information alone. As the occupation labels are generated based on both job description information and the users' actual application usage, they can be used for more precise detection of unauthorized data egress.

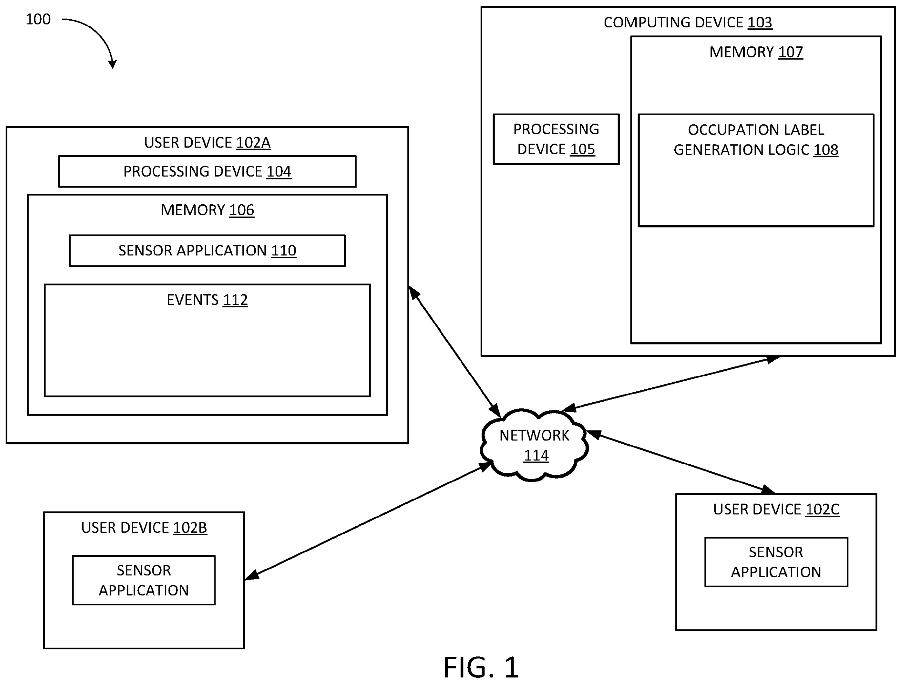

FIG. 1 is a block diagram 100 that illustrates an example of a system 100 for generating user occupation labels for enhanced detection of unauthorized data egress, where the user occupation labels are generated based on job description information, sensor event data and (in some embodiments) third party data, in accordance with some aspects of the present disclosure. The system 100 includes computing devices 102A-102C. In some embodiments, each computing device 102 may be or include the computing system/user device 502 (or a portion thereof) and/or the computer system 600 (or a portion thereof). In some embodiments, each computing device 102 may be or include a desktop computing device, a laptop computing device, a tablet computing device, a smartphone, a wearable computing device, an extended reality (XR) computing device, a gaming console, etc. Each computing device 102 may be operated by a user. In some embodiments, each computing device 102 may be a work device issued to a respective user by an organization (e.g., a company) associated with the user (e.g., the user's employer).

Each computing device 102 may include a processing device and a memory, such as processing device 104 and memory 106 of computing device 102A. The memory 106 may store a sensor application 110. The sensor application 110, when executed by the processing device 104, causes the processing device 104 to obtain (e.g., monitor/collect/receive/create/generate) events 112 that occur with respect to (e.g., on) the computing device 102A. The computing device 102A may store the events 112 in the memory 106 (and/or in other data storage). Similarly, the memory of each other computing device 102 may store a sensor application which, when executed by the corresponding processing device of that computing device 102, causes the processing device to obtain events that occur with respect to (e.g., on) the computing device 102.

The system 100 may further include a computing device 103, which may include a processing device 105 and a memory 107. The memory 107 may store occupation label generation logic 108 that, when executed by the processing device 105, causes the processing device 105 to perform techniques for user occupation label generation as described herein. In some embodiments, the occupation label generation logic 108 may be part of a data protection module (not shown) that can function to detect unauthorized data egress based on user occupation labels in addition to traditional unauthorized data egress factors such as network traffic patterns, unencrypted data transmission, and use of unauthorized software, among others. In some embodiments, the computing device 103 may be operated by an analyst over the network 114. In some embodiments, the computing device 103 may be or include the computer system 600 (or a portion thereof).

The computing devices 102 and 103 may be coupled to each other (e.g., may be operatively coupled, communicatively coupled, may communicate data/messages with each other) via network 114. Network 114 may be a public network (e.g., the internet), a private network (e.g., a local area network (LAN) or wide area network (WAN)), or a combination thereof. In one embodiment, network 114 may include a wired or a wireless infrastructure, which may be provided by one or more wireless communications systems, such as a WiFi^{™} hotspot connected with the network 114 and/or a wireless carrier system that can be implemented using various data processing equipment, communication towers (e.g., cell towers), etc. In some embodiments, the network 140 may be an L3 network. The network 114 may carry communications (e.g., data, message, packets, frames, etc.) between computing device 103 and computing devices 102.

The events 112 that occur on each computing device 102 may include actions such as reading data from data storage (not shown in FIG. 1), writing data to the data storage, receiving data over the network 114, transmitting data over the network 114, moving a file to an external drive, opening an application on the computing device 102, and application execution events which include actions performed by an application on the computing device 102, etc. With respect to actions performed by an application, each sensor application may identify such events based on processes occurring on and/or with respect to the corresponding computing device 102. For example, a sensor application may monitor for events generated by web applications such as a web browser. The sensor application 110 may also monitor for events generated by processes within processes. For example, the sensor application 110 may monitor a web browser, as well as processes running within the web browser such as Google documents.

In some embodiments, the sensor application of each computing device 102 may begin to obtain the events 112 when the computing device 102 is activated for the respective user, such as when the computing device 102 is first issued to the user. In general, a sensor application may obtain a relatively larger number of events when the respective computing device 102 is being used by the user (e.g., during work hours) and the sensor application may obtain a relatively fewer smaller number of events when the respective computing device 102 is not being used by the user (e.g., during meal breaks, during non-work hours).

The sensor application of each computing device 102 may periodically transmit the events captured on its respective computing device 102 to the computing device 103, which may include the occupation label generation logic 108 as discussed hereinabove. The occupation label generation logic 108 may identify the application execution events among the sensor events and may add the application execution events to an application execution event storage (not shown) in the memory 106. The application execution event storage may store application execution events for an analysis time period, which may be any appropriate time period over which an administrator wishes to identify application usage trends per user. In some embodiments, the analysis time period may be set by the administrator (e.g., manually entered or selected from preset options). For example, the administrator may wish to consider only relatively recent application usages that have occurred within the past three months, and thus the analysis time period may be set to 90 days.

The occupation label generation logic 108 may group the application execution events stored in the application execution event storage by application, user and date/time of occurrence (hereinafter referred to as time of occurrence). With respect to time of occurrence, the application execution events may be grouped into particular time windows that the analysis time period is divided into. The analysis time period may be divided into windows of any appropriate length based on the level of granularity desired by the administrator. For example, the analysis time period may be divided into 31 day-long windows when the analysis time period is a month with 31 days, 7 day-long windows that each correspond to a day of the week (i.e., Monday through Sunday) when the analysis time period is a week, or 24 separate hour-long windows when the analysis time period is a day. In this way, an administrator can determine how many times a specific user has executed a specific application(s) per time window, whether the specific user has executed the specific application(s) at least a certain number of times (e.g., once) per time window, and the time windows the specific user's application usage is distributed over (e.g., when/which time windows the frequency of utilization of the specific application(s) is highest, lowest, etc.). This gives the administrator insight into the specific user's usage of that specific application(s) as discussed in further detail herein. The occupation label generation logic 108 may allow for administrator definition of the analysis time period and time windows with any appropriate level of granularity, as well as include a number of predefined "default" time periods and time windows from which an administrator may select.

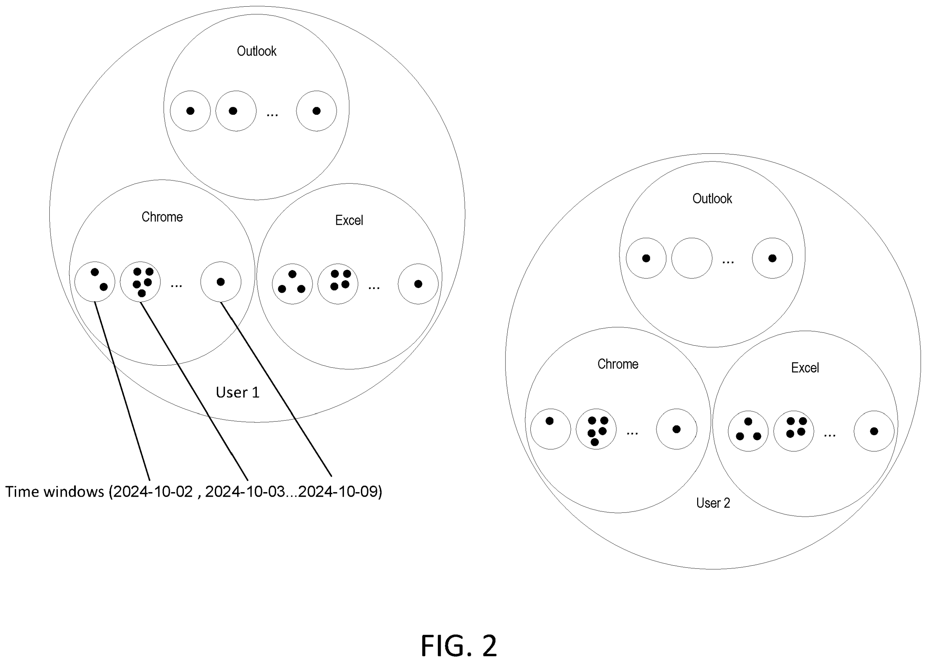

FIG. 2 illustrates an example grouping of the application execution events by user and time of occurrence. More specifically, the example of FIG. 2 illustrates grouping of application execution events for a user 1 and a user 2 during a week-long analysis time period that is divided into day long time windows. The application execution events may correspond to executions of any appropriate applications (in the example of FIG. 2 the Outlook, Chrome and Excel applications) by either user 1 or user 2. Each user, application and day long time window is represented with its own circle as shown in FIG. 2. In FIG. 2, each black dot within a day long time window (e.g., 2024-10-02) represents an execution of the corresponding application by the corresponding user during that time window. Table 1 below illustrates the grouping of application execution events illustrated in FIG. 2 in a table form for two of the days (2024-10-02 and 2024-10-03) of the analysis time period.

| User | Date | Outlook | Chrome | Excel |
|---|---|---|---|---|
| user 1 | 2024-10-02 | 1 | 2 | 3 |
| user 1 | 2024-10-03 | 1 | 5 | 4 |
| user 2 | 2024-10-02 | 1 | 1 | 3 |
| user 2 | 2024-10-03 | 0 | 5 | 4 |
| ... | ... | ... | ... | ... |

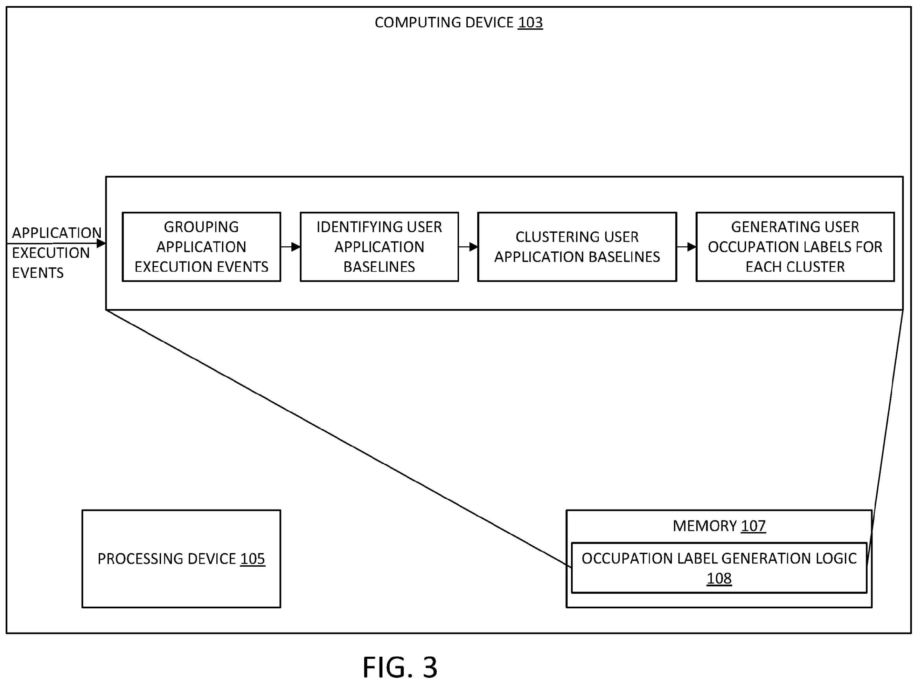

Referring to FIG. 3, once the grouping is complete, the occupation label generation logic 108 may determine application behavior profiles based on the groupings, where each application behavior profile indicates a particular user's behavior with respect to the applications during the analysis time period (e.g., how frequently the particular user utilized each of the applications during the analysis time period). Each application behavior profile may be calculated in any appropriate way. For example, a particular user's application behavior profile may be taken as the average of their per-window usage of each of the applications for all of the time windows in the analysis time period (i.e., the particular user's share of days with an execution of each application). Table 2 below illustrates the application behavior profiles calculated using this averaging method for the two days of the analysis time period illustrated in table 1:

| User | Outlook | Chrome | Excel |
|---|---|---|---|
| user 1 | 1 | 3.5 | 3.5 |
| user 2 | 0.5 | 3 | 3.5 |
| ... | ... | ... | ... |

It should be noted that the averaging method described here is for simplicity of description and more complex methods of determining application behavior profiles may be used that account for e.g., whether the specific user has executed the each application at least a certain number of times (e.g., once) per time window, whether the specific user has executed each application during a minimum number of time windows, and/or the time windows the specific user's application usage is distributed over (e.g., when/which time windows the frequency of utilization of the each application is highest, lowest, etc.).

Once the application behavior profiles have been identified, the occupation label generation logic 108 may cluster the application behavior profiles using any appropriate unsupervised clustering techniques such as k-means clustering. The occupation label generation logic 108 may cluster application behavior profiles that indicate a similar per-window frequency of utilization over the analysis time period for each application. When clustering, the occupation label generation logic 108 may use predefined thresholds for similarity of frequency of utilization. In this way, each cluster may comprise application behavior profiles corresponding to users who utilize each of the applications in a similar manner (e.g., with a similar frequency). For example, if "data scientist" and "data engineer" are two job titles that utilize each of the applications with a similar frequency (i.e., essentially have the same job function), application behavior profiles (i.e., users) who have either title will be clustered together. It should be noted that the occupation label generation logic 108 need not cluster only application behavior profiles that have similar frequency of use for each of the applications. In some embodiments, the occupation label generation logic 108 may utilize application thresholds when clustering, where an application threshold may comprise a minimum number of applications for which two application behavior profiles must have a similar frequency of use in order to be clustered together.

The occupation label generation logic 108 may source job description information of the users that belong to each application behavior profile cluster from an authentication service (not shown but described hereinabove) of the system 100 and perform natural language processing (NLP) preprocessing techniques on the job description information to clean it. Examples of such NLP preprocessing techniques include stemming, lemmatization, tokenization and/or other textual data cleansing methods. Stemming is a text normalization technique in NLP that eliminates prefixes and suffixes from words to reduce the words to their base form. This aides in text normalization for easier processing. Lemmatization is the process of reducing a word to its base form, but unlike stemming, lemmatization takes into account the context of the word and produces a valid word. This is in contrast to stemming, which may produce a non-word as the base form. Both stemming and lemmatization seek to reduce inflectional forms and sometimes derivationally related forms of a word to a common base form. Tokenization is the process of breaking text into smaller units called tokens, which can be used by machine learning models to perform various tasks. Performance of these preprocessing techniques results in a "cleaning" of the job description information where typos in the job description information may be corrected and similar job titles in the job description information may be merged together into job labels, among other modifications. Thus, the cleaned job description information may include job labels and other job description information that has been tokenized.

For each application behavior profile cluster, the occupation label generation logic 108 may match the application behavior profile cluster with the cleaned job description information of the users that belong to the application behavior profile cluster. More specifically, the occupation label generation logic 108 may calculate for each application behavior profile cluster, what the share of users with a certain cleaned job label is. Table 3 below illustrates the information on job label count and user share for an example application behavior profile cluster #1:

| Cluster # | Job Label | Count | Share |
|---|---|---|---|
| 1 | Cloud Engineer | 36 | 0.5 |
| 1 | Cloud Engineer Manager | 7 | 0.1 |
| 1 | Data Scientist | 12 | 0.17 |
| 1 | ML Engineer | 9 | 0.13 |
| 1 | UI Engineer Backend | 7 | 0.1 |

The share of users with a certain cleaned job label may be calculated based on the total number of users in application behavior profile cluster #1, which is 71. For example, of the 71 users, 36 have the title "Cloud Engineer." Hence, the share of user with the "Cloud Engineer" job label is 36 / 71 = 0.507.

The occupation label generation logic 108 may perform a similar calculation for the application behavior profiles. However, with respect to the application behavior profiles, the occupation label generation logic 108 may focus on the average application behavior profile. As each application behavior profile is assigned to application behavior profile cluster #1, the occupation label generation logic 108 can calculate the average application behavior profile in that cluster over all users. This results in the following table 4:

| Cluster # | Outlook | Chrome | Excel |
|---|---|---|---|
| 1 | 0.68 | 0.9 | 0.25 |
| ... | ... | ... | ... |

Thus, for each cluster the occupation label generation logic 108 may determine the share of each cleaned job label and the average application behavior profile. For each cluster, the occupation label generation logic 108 may use NLP to generate user occupation labels based on tokens in the cleaned job description information and the aggregate behavior of the cluster (indicated by the share of each cleaned job label and the average application behavior profile of the cluster). More specifically, the occupation label generation logic 108 may match tokens in the cleaned job description information with the aggregate behavior of the corresponding cluster and generate user occupation labels that accurately describe what users in that cluster actually do. For example, in a cluster that contains application behavior profiles (users) with three different job titles (based on their job description information), the occupation label generation logic 108 may attempt to generate a user occupation label that summarizes the three different job titles since they are all in the same cluster.

Continuing the example of table 3, in some embodiments the occupation label generation logic 108 may generate the user occupation labels using a simple NLP approach e.g., based on the top-n tokens of cleaned job labels. Each cleaned job label is split into tokens and the total number of tokens across all cleaned job labels is counted and ranked resulting in the following table (table 5):

| Cluster # | Token | Rank |
|---|---|---|
| 1 | Cloud | 1 |
| 1 | Engineer | 2 |
| 1 | Data | 3 |
| 1 | Scientist | 4 |
| 1 | ML | 5 |

If the occupation label generation logic 108 generates user occupation labels based on e.g., the top 5 tokens, this may result in a user occupation label of "Cloud Engineer Data Scientist ML." While "Cloud Engineer Data Scientist ML" describes what users in the cluster #1 are doing, it may not be ideal for an analyst who needs to investigate subsequent application execution events for suspicious activity.

In other embodiments, the occupation label generation logic 108 may leverage a generative AI module (not shown) that receives cleaned job labels and application baselines for each cluster as input, and is tasked with producing new occupation labels for each cluster as output. For example, the generative AI module may receive the following prompt (based on tables 3 and 4):
Based on a group of employees with these job labels/corresponding share percentages: {'Cloud Engineer': '50%', 'Cloud Engineering Manager': '10%', 'Data Scientist': '17%', 'ML Engineer': 13%', 'UI Engineer Backend': '10%'} and the following average share of usages of these applications: {'Outlook': '68%', 'Chrome': '90%', 'Excel': '25%, 'Visual Studio': '86%,' 'Git': '62%'}, please generate an exact and descriptive name for this cluster to be used internally.

Based on the above prompt, the generative AI module may output the following response (comprising a user occupation label and a corresponding description):
User Occupation Label: Cloud & ML Engineering Team
Description: This cluster represents a technical group of employees who primarily use development tools (Git, Visual Studio). The cluster consists mainly of Cloud Engineers, Data Scientists, ML Engineers who likely collaborate on technical solutions and demonstrations for clients. Their heavy usage of Git (62%) and Visual Studio (86%) indicates that they're actively involved in code development and version control.

In some embodiments, the occupation label generation logic 108 may generate user occupation labels for each cluster based not only on tokens in the cleaned job description information and the aggregate behavior of the cluster, but also based on available third-party data. Third-party data may include information about the users in a cluster such as human resources information, email contacts or even email content. Third-party data may also include information from third party collaboration application APIs such as Slack^{™}, Microsoft Office^{™}, etc. This may include what documents a user is working on, what slack groups a user is a part of, and who (i.e., which other users) a user regularly meets with. Generally, the more data that is available to the occupation label generation logic 108, the more accurate the clustering process will be and the more accurate the user occupation labels that are generated will be.

In some embodiments, if the occupation label generation logic 108 is unable to derive occupation labels in the case that the cleaned job description information is sparse/company specific/not meaningful, the occupation label generation logic 108 may generate user occupation labels using a generative NLP approach. For example, if the user occupation label generated for a user or a group of users is an uninformative label such as "B5," the occupation label generation logic 108 can still use the generative AI module to deduce a meaningful label based on the aggregate behavior of the corresponding cluster and/or any available third-party data.

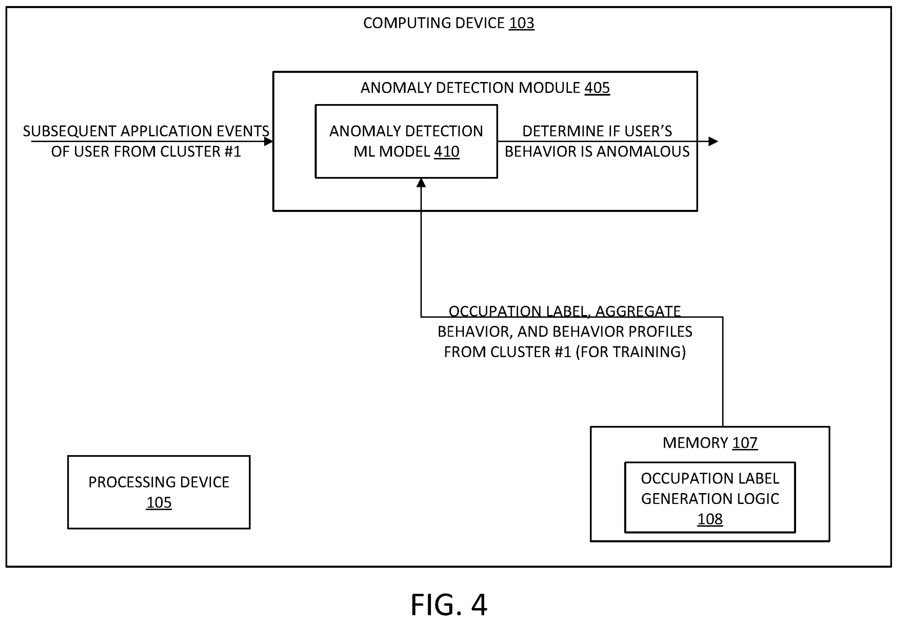

Referring to FIG. 4, the occupation label generation logic 108 may provide the generated user occupation labels and their corresponding descriptions (if applicable), corresponding aggregate behavior (indicated by the share of each cleaned job label and the average application behavior profile) of the cluster each user occupation label was generated from, and (in some embodiments) the application baselines of the cluster each user occupation label was generated from to an anomaly detection module 405. The anomaly detection module 405 may use this information for anomaly detection in the context of data protection. More specifically, the anomaly detection module 405 may comprise an anomaly detection ML model 410 which may be any appropriate ML model and may be trained specifically on the received user occupation labels, corresponding descriptions (if applicable), corresponding aggregate behavior, and corresponding application baselines in order to learn to identify if certain behavior by a user of the cluster (i.e., user with a particular user occupation label) is anomalous (i.e., corresponds to unauthorize data egress). For example, the anomaly detection ML model 410 may be trained based on the aggregate behavior of all users having the user occupation label "Cloud & ML Engineering Team." In this way, the anomaly detection ML model 410 may learn how users in the cluster associated with the "Cloud & ML Engineering Team" occupation label utilize a particular application(s). The anomaly detection module 405 may monitor subsequent application events of the user and use the anomaly detection ML model 410 to determine if the behavior of a single user who belongs to the cluster is anomalous (i.e., indicative of unauthorized data egress).

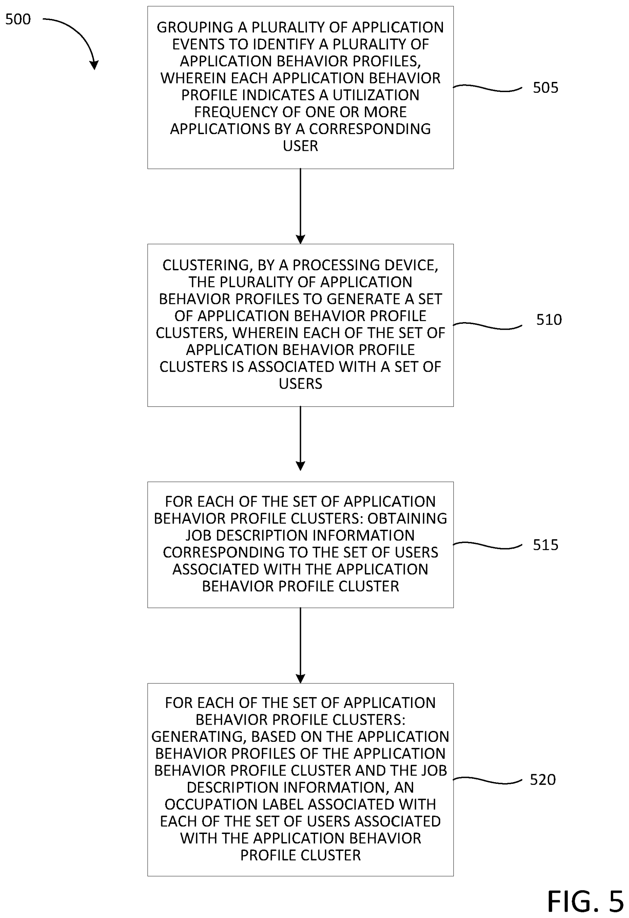

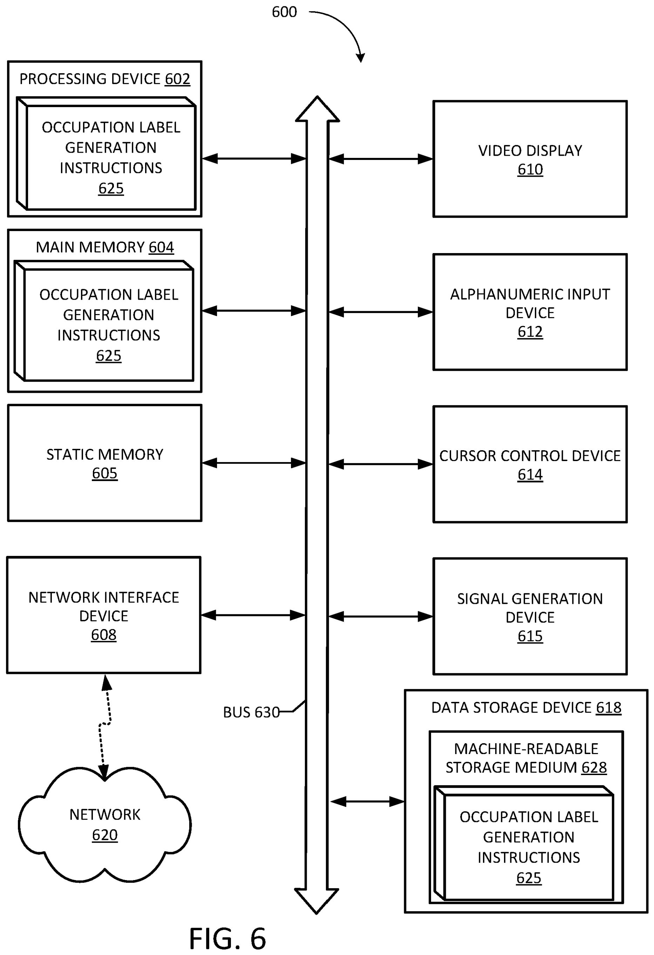

FIG. 5 is a flow diagram 500 of a method for generating user occupation labels for use in detection of unauthorized data egress, in accordance with some aspects of the present disclosure. The method may be performed by processing logic that may include hardware (e.g., a processing device), software (e.g., instructions running/executing on a processing device), firmware (e.g., microcode), or a combination thereof. In some aspects, at least a portion of the method may be performed by the computing device 103 (shown in FIG. 1), the processing device 105 (shown in FIG. 1), the computing system/user device 502 (shown in FIG. 6), the processing device 504 (shown in FIG. 6), the computer system 600 (shown in FIG. 7), the processing device 602 (shown in FIG. 7), or a combination thereof.

The method illustrates example functions used by various embodiments. Although specific function blocks ("blocks") are disclosed in the method, such blocks are examples. That is, embodiments are well suited to performing various other blocks or variations of the blocks recited in the method. It is appreciated that the blocks in the method may be performed in an order different than presented, and that not all of the blocks in the method may be performed.

Referring also to FIGS. 1-3, the sensor application of each computing device 102 may periodically transmit the events captured on its respective computing device 102 to the computing device 103, which may include the occupation label generation logic 108 as discussed hereinabove. The occupation label generation logic 108 may identify the application execution events among the sensor events and may add the application execution events to an application execution event storage (not shown) in the memory 106. The application execution event storage may store application execution events for an analysis time period, which may be any appropriate time period over which an administrator wishes to identify application usage trends per user. In some embodiments, the analysis time period may be set by the administrator (e.g., manually entered or selected from preset options). For example, the administrator may wish to consider only relatively recent application usages that have occurred within the past three months, and thus the analysis time period may be set to 90 days.

At block 505, the occupation label generation logic 108 may group the application execution events stored in the application execution event storage by application, user and date/time of occurrence (hereinafter referred to as time of occurrence). With respect to time of occurrence, the application execution events may be grouped into particular time windows that the analysis time period is divided into. The analysis time period may be divided into windows of any appropriate length based on the level of granularity desired by the administrator. For example, the analysis time period may be divided into 31 day-long windows when the analysis time period is a month with 31 days, 7 day-long windows that each correspond to a day of the week (i.e., Monday through Sunday) when the analysis time period is a week, or 24 separate hour-long windows when the analysis time period is a day. In this way, an administrator can determine how many times a specific user has executed a specific application(s) per time window, whether the specific user has executed the specific application(s) at least a certain number of times (e.g., once) per time window, and the time windows the specific user's application usage is distributed over (e.g., when/which time windows the frequency of utilization of the specific application(s) is highest, lowest, etc.). This gives the administrator insight into the specific user's usage of that specific application(s) as discussed in further detail herein. The occupation label generation logic 108 may allow for administrator definition of the analysis time period and time windows with any appropriate level of granularity, as well as include a number of predefined "default" time periods and time windows from which an administrator may select.

Referring to FIG. 3, once the grouping is complete, the occupation label generation logic 108 may determine application behavior profiles based on the groupings, where each application behavior profile indicates a particular user's behavior with respect to the applications during the analysis time period (e.g., how frequently the particular user utilized each of the applications during the analysis time period). Each application behavior profile may be calculated in any appropriate way. For example, a particular user's application behavior profile may be taken as the average of their per-window usage of each of the applications for all of the time windows in the analysis time period (i.e., the particular user's share of days with an execution of each application).

It should be noted that the averaging method described here is for simplicity of description and more complex methods of determining application behavior profiles may be used that account for e.g., whether the specific user has executed the each application at least a certain number of times (e.g., once) per time window, whether the specific user has executed each application during a minimum number of time windows, and/or the time windows the specific user's application usage is distributed over (e.g., when/which time windows the frequency of utilization of the each application is highest, lowest, etc.).

At block 510, once the application behavior profiles have been identified, the occupation label generation logic 108 may cluster the application behavior profiles using any appropriate unsupervised clustering techniques such as k-means clustering. The occupation label generation logic 108 may cluster application behavior profiles that indicate a similar per-window frequency of utilization over the analysis time period for each application. When clustering, the occupation label generation logic 108 may use predefined thresholds for similarity of frequency of utilization. In this way, each cluster may comprise application behavior profiles corresponding to users who utilize each of the applications in a similar manner (e.g., with a similar frequency). For example, if "data scientist" and "data engineer" are two job titles that utilize each of the applications with a similar frequency (i.e., essentially have the same job function), application behavior profiles (i.e., users) who have either title will be clustered together. It should be noted that the occupation label generation logic 108 need not cluster only application behavior profiles that have similar frequency of use for each of the applications. In some embodiments, the occupation label generation logic 108 may utilize application thresholds when clustering, where an application threshold may comprise a minimum number of applications for which two application behavior profiles must have a similar frequency of use in order to be clustered.

At block 515, the occupation label generation logic 108 may source job description information of the users that belong to each application behavior profile cluster from an authentication service (not shown but described hereinabove) of the system 100 and perform natural language processing (NLP) preprocessing techniques on the job description information to clean it. Examples of such NLP preprocessing techniques include stemming, lemmatization, tokenization and/or other textual data cleansing methods. Stemming is a text normalization technique in NLP that eliminates prefixes and suffixes from words to reduce the words to their base form. This aides in text normalization for easier processing. Lemmatization is the process of reducing a word to its base form, but unlike stemming, lemmatization takes into account the context of the word and produces a valid word. This is in contrast to stemming, which may produce a non-word as the base form. Both stemming and lemmatization seek to reduce inflectional forms and sometimes derivationally related forms of a word to a common base form. Tokenization is the process of breaking text into smaller units called tokens, which can be used by machine learning models to perform various tasks. Performance of these preprocessing techniques results in a "cleaning" of the job description information where typos in the job description information may be corrected and similar job titles in the job description information may be merged together into job labels, among other modifications. Thus, the cleaned job description information may include job labels and other job description information that has been tokenized.

For each application behavior profile cluster, the occupation label generation logic 108 may match the application behavior profile cluster with the cleaned job description information of the users that belong to the application behavior profile cluster. More specifically, the occupation label generation logic 108 may calculate for each application behavior profile cluster, what the share of users with a certain cleaned job label is. The occupation label generation logic 108 may perform a similar calculation for the application behavior profiles. However, with respect to the application behavior profiles, the occupation label generation logic 108 may focus on the average application behavior profile.

At block 520, for each cluster, the occupation label generation logic 108 may use NLP to generate user occupation labels based on tokens in the cleaned job description information and the aggregate behavior of the cluster (indicated by the share of each cleaned job label and the average application behavior profile of the cluster). In some embodiments, the occupation label generation logic 108 may match tokens in the cleaned job description information with the aggregate behavior of the corresponding cluster and generate user occupation labels that accurately describe what users in that cluster actually do. For example, in a cluster that contains application behavior profiles (users) with three different job titles (based on their job description information), the occupation label generation logic 108 may attempt to generate a user occupation label that summarizes the three different job titles since they are all in the same cluster.

In other embodiments, the occupation label generation logic 108 may leverage a generative AI module (not shown) that receives cleaned job labels and application baselines for each cluster as input, and is tasked with producing new occupation labels for each cluster as output.

In some embodiments, the occupation label generation logic 108 may generate user occupation labels for each cluster based not only on tokens in the cleaned job description information and the aggregate behavior of the cluster, but also based on available third-party data. Third-party data may include information about the users in a cluster such as human resources information, email contacts or even email content. Third-party data may also include information from third party collaboration application APIs such as Slack, Microsoft Office, etc. This may include what documents a user is working on, what slack groups a user is a part of, and who (i.e., which other users) a user regularly meets with. Generally, the more data that is available to the occupation label generation logic 108, the more accurate the clustering process will be and the more accurate the user occupation labels that are generated will be.

In some embodiments, if the occupation label generation logic 108 is unable to derive occupation labels in the case that the cleaned job description information is sparse/company specific/not meaningful, the occupation label generation logic 108 may generate user occupation labels using a generative NLP approach. For example, if the user occupation label generated for a user or a group of users is an uninformative label such as "B5," the occupation label generation logic 108 can still use the generative AI module to deduce a meaningful label based on the aggregate behavior of the corresponding cluster and/or any available third-party data.

Referring to FIG. 4, the occupation label generation logic 108 may provide the generated user occupation labels and their corresponding descriptions, corresponding aggregate behavior (indicated by the share of each cleaned job label and the average application behavior profile) of the cluster each user occupation label was generated from, and (in some embodiments) the application baselines of the cluster each user occupation label was generated from to an anomaly detection module 405. The anomaly detection module 405 may use this information for anomaly detection in the context of data protection. More specifically, the anomaly detection module 405 may comprise an anomaly detection ML model 410 which may be any appropriate ML model and may be trained specifically on the received user occupation labels, corresponding descriptions, corresponding aggregate behavior, and corresponding application baselines in order to learn to identify if certain behavior by a user of the cluster (i.e., user with a particular user occupation label) is anomalous. For example, the anomaly detection ML model may be trained based on the aggregate behavior of all users having the user occupation label "Cloud & ML Engineering Team." In this way, the anomaly detection ML model may learn how users in the cluster associated with the "Cloud & ML Engineering Team" occupation label utilize a particular application(s) and determine if the behavior of a single user who belongs to the cluster is anomalous.

FIG. 6 illustrates a diagrammatic representation of a machine in the example form of a computer system 600 within which a set of instructions, for causing the machine to perform any one or more of the methodologies discussed herein for generating occupation labels for use in unauthorized data egress detection.

In alternative embodiments, the machine may be connected (e.g., networked) to other machines in a local area network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, a switch or bridge, a hub, an access point, a network access control device, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In some embodiments, the computer system 600 may be representative of a server.

The computer system 600 includes a processing device 602, a main memory 604 (e.g., read-only memory (ROM), flash memory, dynamic random access memory (DRAM), a static memory 605 (e.g., flash memory, static random access memory (SRAM), etc.), and a data storage device 618 which communicate with each other via a bus 630. Any of the signals provided over various buses described herein may be time multiplexed with other signals and provided over one or more common buses. Additionally, the interconnection between circuit components or blocks may be shown as buses or as single signal lines. Each of the buses may alternatively be one or more single signal lines and each of the single signal lines may alternatively be buses.

The computer system 600 may further include a network interface device 608 which may communicate with a network 620. The computer system 600 also may include a video display unit 610 (e.g., a liquid crystal display (LCD) or a cathode ray tube (CRT)), an alphanumeric input device 612 (e.g., a keyboard), a cursor control device 614 (e.g., a mouse), and a signal generation device 615 (e.g., an acoustic signal generation device, such as a speaker). In some embodiments, the video display unit 610, the alphanumeric input device 612, and the cursor control device 614 may be combined into a single component or device (e.g., an LCD touch screen).

The processing device 602 represents one or more general-purpose processing devices such as a microprocessor, central processing unit, or the like. More particularly, the processing device may be complex instruction set computing (CISC) microprocessor, reduced instruction set computer (RISC) microprocessor, very long instruction word (VLIW) microprocessor, or processor implementing other instruction sets, or processors implementing a combination of instruction sets. The processing device 602 may also be one or more special-purpose processing devices such as an application specific integrated circuit (ASIC), a field programmable gate array (FPGA), a digital signal processor (DSP), network processor, or the like. The processing device 602 is configured to execute occupation label generation instructions 625, for performing the operations and steps discussed herein. For example, the occupation label generation instructions 625 may include instructions for obtaining, via a sensor application installed on a user device, a plurality of events occurring on the user device, where each event in the plurality of events indicates a respective day and a respective time. The activity modelling instructions 625 may include instructions for aggregating, based on the respective day and the respective time, the plurality of events to generate time series data. The occupation label generation instructions 625 may include instructions for performing a smoothing operation on the time series data to generate a curve. The occupation label generation instructions 625 may include instructions for classifying an event on the user device as usual or unusual based on a baseline level of activity on the user device and the curve.

The data storage device 618 may include a machine-readable storage medium 628 that stores the occupation label generation instructions 625 (e.g., software) embodying any one or more of the methodologies of functions described herein. The occupation label generation instructions 625 may also reside, completely or at least partially, within the main memory 604 or within the processing device 602 during execution thereof by the computer system 600; the main memory 604 and the processing device 602 also constituting machine-readable storage media. The occupation label generation instructions 625 may further be transmitted or received over a network 620 via the network interface device 608.

While the machine-readable storage medium 628 is shown in an exemplary embodiment to be a single medium, the term "machine-readable storage medium" should be taken to include a single medium or multiple media (e.g., a centralized or distributed database, or associated caches and servers) that store the one or more sets of instructions. A machine-readable storage medium includes any mechanism for storing information in a form (e.g., software, processing application) readable by a machine (e.g., a computer). The machine-readable storage medium may include, but is not limited to, magnetic storage medium (e.g., floppy diskette); optical storage medium (e.g., CD-ROM); magneto-optical storage medium; read-only memory (ROM); random-access memory (RAM); erasable programmable memory (e.g., EPROM and EEPROM); flash memory; or another type of medium suitable for storing electronic instructions.

Unless specifically stated otherwise, terms such as "obtaining," "aggregating," "performing," "smoothing," "classifying," "establishing," "outputting," "inputting," "transmitting," "receiving," "computing," "calculating," "estimating," "identifying," "adjusting," "determining," "removing," "adding," "training," or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission, or display devices. Also, the terms "first," "second," "third," "fourth," etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may comprise a general-purpose computing device selectively programmed by a computer program stored in the computing device. Such a computer program may be stored in a computer-readable non-transitory storage medium.

The methods and illustrative examples described herein are not inherently related to any particular computer or other apparatus. Various general-purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims, along with the full scope of equivalents to which the claims are entitled.

As used herein, the singular forms "a," "an," and "the" are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. § 112(f) for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the present disclosure to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the present disclosure is not to be limited to the details given herein, but may be modified within the scope and equivalents of the appended claims.

## Claims

1. A method comprising:
grouping a plurality of application events to identify a plurality of application behavior profiles, wherein each application behavior profile indicates a utilization frequency of one or more applications by a corresponding user;
clustering, by a processing device, the plurality of application behavior profiles to generate a set of application behavior profile clusters, wherein each of the set of application behavior profile clusters is associated with a set of users; and
for each of the set of application behavior profile clusters:
obtaining job description information corresponding to the set of users associated with the application behavior profile cluster; and
generating, based on the application behavior profiles of the application behavior profile cluster and the job description information, an occupation label associated with each of the set of users associated with the application behavior profile cluster.

2. The method of claim 1, further comprising:
for each of the set of application behavior profile clusters:
obtaining third-party data corresponding to the set of users associated with the application behavior profile cluster, wherein the generating of the occupation label is further based on the third-party data.

3. The method of any preceding claim, wherein the plurality of application events are grouped by user, application and time of occurrence.

4. The method of any preceding claim, wherein the set of occupation labels are generated using natural language processing (NLP).

5. The method of any preceding claim, further comprising:
for each occupation label:
monitoring subsequent application events generated by each user of the set of users associated with the occupation label; and
identifying whether any of the subsequent application events correspond to unauthorized data egress based at least in part on the application behavior profiles of the corresponding application behavior profile cluster.

6. The method of any preceding claim, wherein each occupation label summarizes job functions performed by each of the set of users associated with the occupation label.

7. The method of any preceding claim, further comprising:
for each of the set of application behavior profile clusters:
obtaining raw job description information for each of the set of users associated with the application behavior profile cluster; and
preprocessing the raw job description information to generate the job description information corresponding to the set of users associated with the application behavior profile cluster.

8. A system comprising:
a memory; and
a processing device operatively coupled to the memory, the processing device to:
group a plurality of application events to identify a plurality of application behavior profiles, wherein each application behavior profile indicates a utilization frequency of one or more applications by a corresponding user;
cluster the plurality of application behavior profiles to generate a set of application behavior profile clusters, wherein each of the set of application behavior profile clusters is associated with a set of users; and
for each of the set of application behavior profile clusters:
obtain job description information corresponding to the set of users associated with the application behavior profile cluster; and
generate, based on the application behavior profiles of the application behavior profile cluster and the job description information, an occupation label associated with each of the set of users associated with the application behavior profile cluster.

9. The system of claim 8, wherein the processing device is further to:
for each of the set of application behavior profile clusters:
obtain third-party data corresponding to the set of users associated with the application behavior profile cluster, wherein the processing device generates the occupation label based further on the third-party data.

10. The system of any one of claims 8 to 9, wherein the plurality of application events are grouped by user, application and time of occurrence.

11. The system of any one of claims 8 to 10, wherein the processing device generates the set of occupation labels using natural language processing (NLP).

12. The system of any one of claims 8 to 11, wherein the processing device is further to:
for each occupation label:
monitor subsequent application events generated by each user of the set of users associated with the occupation label; and
identify whether any of the subsequent application events correspond to unauthorized data egress based at least in part on the application behavior profiles of the corresponding application behavior profile cluster.

13. The system of any one of claims 8 to 12, wherein each occupation label summarizes job functions performed by each of the set of users associated with the occupation label.

14. The system of any one of claims 8 to 13, wherein the processing device is further to:
for each of the set of application behavior profile clusters:
obtain raw job description information for each of the set of users associated with the application behavior profile cluster; and
preprocess the raw job description information to generate the job description information corresponding to the set of users associated with the application behavior profile cluster.

15. A computer program which, when executed by a processing device, causes the processing device to carry out the method of any one of claims 1 to 7.
